# FASCICULE DE BREVET EUROPEEN

(11) **EP 1 939 057 B1**
(45) Date de publication et mention de la délivrance du brevet: **23.06.2010**
(21) Numéro de dépôt: 07425805.4
(22) Date de dépôt: 19.12.2007
(51) Int. Cl.: B60S 3/06

(54) **Brosse de nettoyage avec des buses aspergeantes intérieures et extérieures dirigées à commande**
Reinigungsbürste mit steuerbaren Innen- und Außensprühdüsen
Cleaning brush with controlled internal and external spraying nozzles

(30) Priorité: 29.12.2006 IT VR20060201
(43) Date de publication de la demande: 02.07.2008
(73) Titulaire: Peretti-Lorenzo, 36071 Arzignano (VI) (IT)
(72) Inventeur: Peretti-Lorenzo, 36071 Arzignano (VI) (IT)

(56) Documents cités:
- WO-A-01/65971
- DE-A1- 1 630 527
- FR-A- 2 574 005

## Description

Le document US 5 628 081 décrit une brosse de nettoyage selon le préambule de la revendication 1.

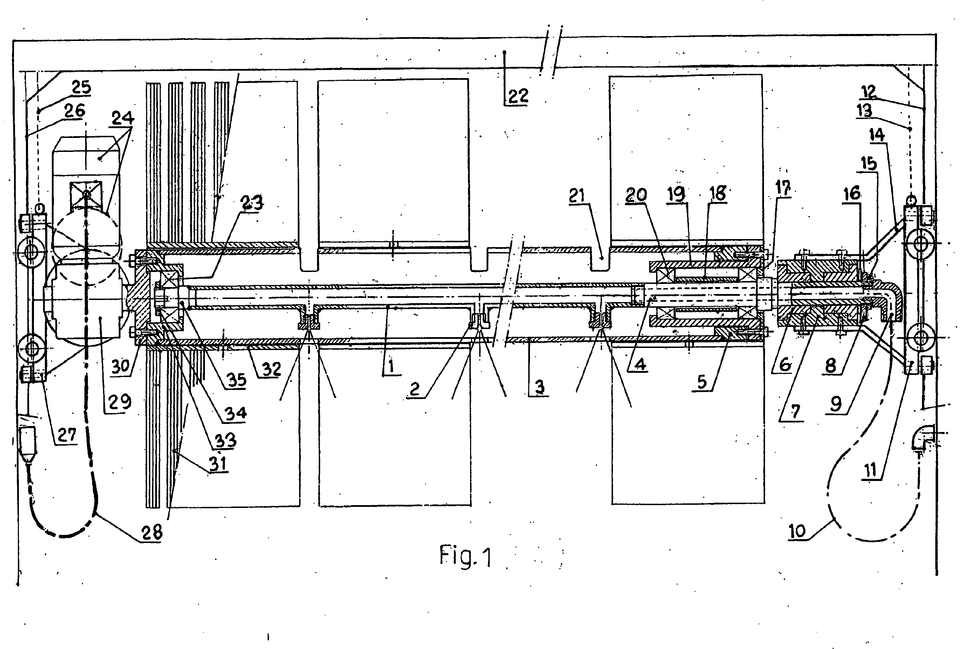

La "Brosse de nettoyage avec des buses aspergeantes intérieures et extérieures dirigées à commande", est conçue pour le travail en simultané, soit des franges en rotation, qui brossent la carrosserie des véhicules, soit des jets d'eau en haute pression qui sortent de l'arbre porte-buses. Le nouveau type de brosse, pourrait substituer les normales brosses, avec un axe de rotation horizontal (et vertical), employées actuellement sur les installations automatiques pour le nettoyage des voitures et fourgons, ainsi appelées installations à "Portique mobile"sur rails, ou"Chaînes de nettoyage". Cette nouvelle brosse peut en outre substituer les brosses normales employées dans les installations de nettoyage automatique pour autobus, semi-remorques, véhicules industriels, voitures des trains et moyens de transport spéciaux en général. L'introduction et l'alimentation du tube collecteur à l'intérieur de 1' arbre "vide" (ou corps tubulaire) porte-franges, se fait profitant de la partie "accessible" du côté opposé au moteur réducteur. Comme illustré dans le dessin ci-joint figure 1, on aura: normalement à gauche le groupe moteur réducteur figure 1 (24) (29), qui fait tourner l'arbre de la brosse, supporté par son chariot coulissant (27) et connecté à son câble d'alimentation (28); tandis qu'à droite, le support extérieur (7) de la brosse est traversé par un "pivot avec un trou passant"(4). Le pivot (4), à l'intérieur de l'arbre (3), est connecté au tube collecteur (1) qui traverse tout l' arbre jusqu'à ce qu' il s'appuie au support roulement sur le côté gauche (33). On a ainsi le moteur réducteur qui fait tourner l'arbre porte-franges (3) tandis qu'à l'intérieur de l'arbre, le tube collecteur (1), posé sur des roulements à billes à l'extrémité (23) et (20), reste en position ferme, avec les buses (2) orientées vers la surface du véhicule. Cette série de buses, réparties également propulse l'eau à travers des fentes (21) coaxiales à ces mêmes buses; fentes disposées (minimum trois ou plus pour chaque buse) sur la circonférence de l'arbre porte-franges. Sur la circonférence, en tout cas, entre fente et fente restent des espaces pour garantir un minimum de solidité à l'arbre porte-franges. Ces espaces (qu'on indique par exemple de 20mm chacun, mais qui peuvent être réduits aussi au moins de 10 mm), seront "l'ossature" de l'arbre porte-franges et ils seront adéquatement renforcés: soit avec des nervures, soit en soudant à l'intérieur des lames en acier 20x5 mm, en appliquant des côtes de renforcement, ou autre. Naturellement plus les "zones d'ombre" seront serrées, plus d'espace opérationnel on laissera aux jets d'eau. Sur un diamètre d'arbre, qu'on suppose d'environ 120mm (circonférence de 376mm) on peut appliquer trois fentes avec un arc égal à 105mon chacune, en restant ainsi entre les fentes trois espaces d'ombre de 20mm chacune (la zone d'ombre globale est égale au 16% de la circonférence). Des tests effectués sur un prototype en rotation, on remarque que les interruptions du jet, dûes à ces zones d'ombre, résultent visuellement à peine perceptibles. L'alimentation hydrique du tube collecteur se produit grâce à un tube flexible à droite, figure 1 (10), crocheté à le raccord d'entrée (9). Le support (7) est ancré au chariot coulissant droit (11) avec des étriers (14) comme cela se fait actuellement dans les normaux nettoyages à brosses.

### Nomenclature de la "Brosse avec des buses dirigées à commande" figure 1

1) - Tube collecteur porte-buses;
2) - Buses aspergeantes;
3) - Arbre (ou corps tubulaire) porte-franges;
4) - Pivot avec trou passant;
5) - Collier pour le fixage du support intérieur droit pour des roulements à billes;
6) - Boucles lubrifiantes;
7) - Support externe droit de la brosse;
8) - Levier de commande pour le changement à plus positions du collecteur porte-buses
9) - Raccord d'entrée;
10) - Tube flexible pour l'alimentation du tube collecteur porte-buses;
11) - Chariot coulissant droit (porte-brosse);
12) - Guides pour le coulissement du chariot droit porte-brosse;
13) - Corde ou chaîne pour le soulèvement du chariot;
14) - Etriers pour l'ancrage du support droit du chariot;
15) - Frette de blocage;
16) - Rondelle (ou épaisseur) compensatrice;
17) - Joue (bride) pour le blocage des roulements;
18) - Diviseur intérieur entre roulements;
19) - Support droit pour roulements de soutien tube collecteur;
20) - Roulement à sphères pour le soutien tube collecteur côté droit;
21) - Fentes passage jets réalisées sur la circonférence de l'arbre;
22) - Structure du "Portail nettoyage autornatique";
23) - Roulement à billes d'appui tube collecteur côté gauche;
24) - Moteur électrique;
25) - Corde ou chaîne pour le soulèvement du chariot gauche;
26) - Guides pour le coulissement du chariot porte brosse côté gauche;
27) - Chariot de coulissement (porte-brosse) côté gauche;
28) - Câble électrique d'alimentation moteur électrique;
29) - Groupe réducteur (pour la rotation brosse);
30) - Arbre de transmission du mouvement de rotation, avec bride;
31) - franges anti-griffures;
32) - Collier porte-franges;
33) - Support gauche pour roulement intérieur d'appui tube collecteur;
34) - Frette pour le blocage du moyeu terminal du tube collecteur;
35) - Moyeu terminal du tube collecteur;
36) - vis de fixation du collier porte-franges;

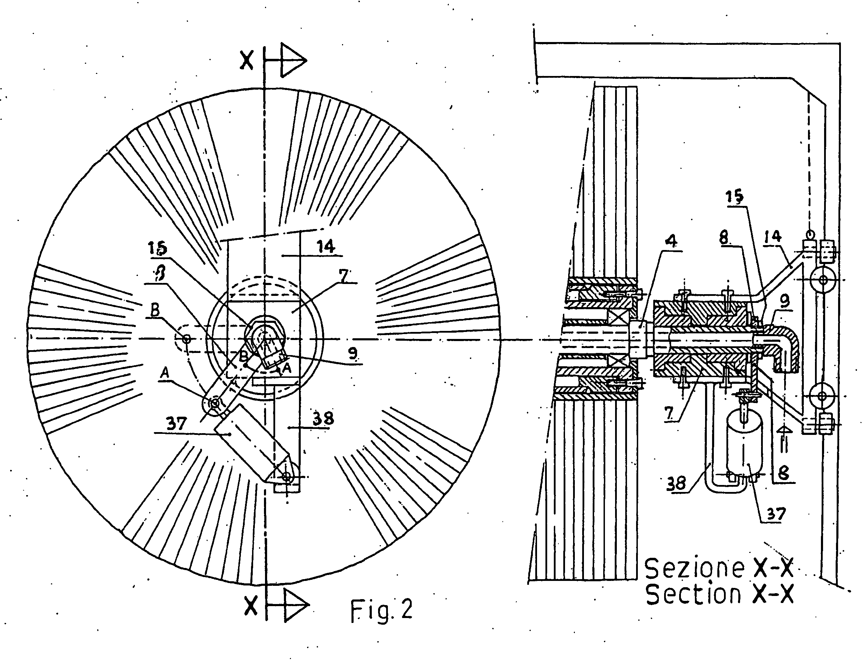

### Changement de position "A - B" du tube collecteur porte-buses figure 2

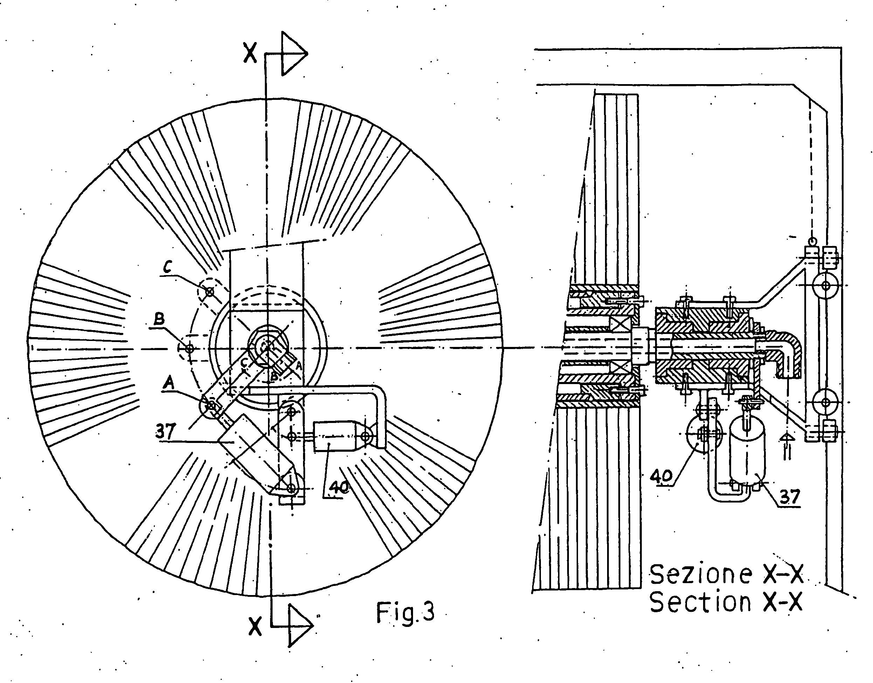

En phase de nettoyage, pendant la course du portique aller et retour, pendant que l'arbre porte-franges, dans le mouvement de rotation, brosse le véhicule, le tube collecteur interne, comme on a dit reste arrêté, en ayant cependant deux positions de travail (il est possible de changer l'angle d'incidence des jets sur le véhicule pendant la course). Ce changement de position est obtenu grâce à un cylindre pneumatique à double effet, figure 2 (37), qui, en agissant sur le levier de commande (8), lié au pivot (4), fait rouler le tube collecteur porte-buses. La commande du cylindre peut se faire par exemple au milieu de la course, ou dans un autre moment par des capteurs positionnés le long du parcours. Par exemple si on veut trois positions des jets d'eau pour intervenir de manière plus efficace sur la forme du véhicule, on peut avoir un cylindre à trois stades, ou utiliser dedeux cylindres à double effet, (voir figure 3).

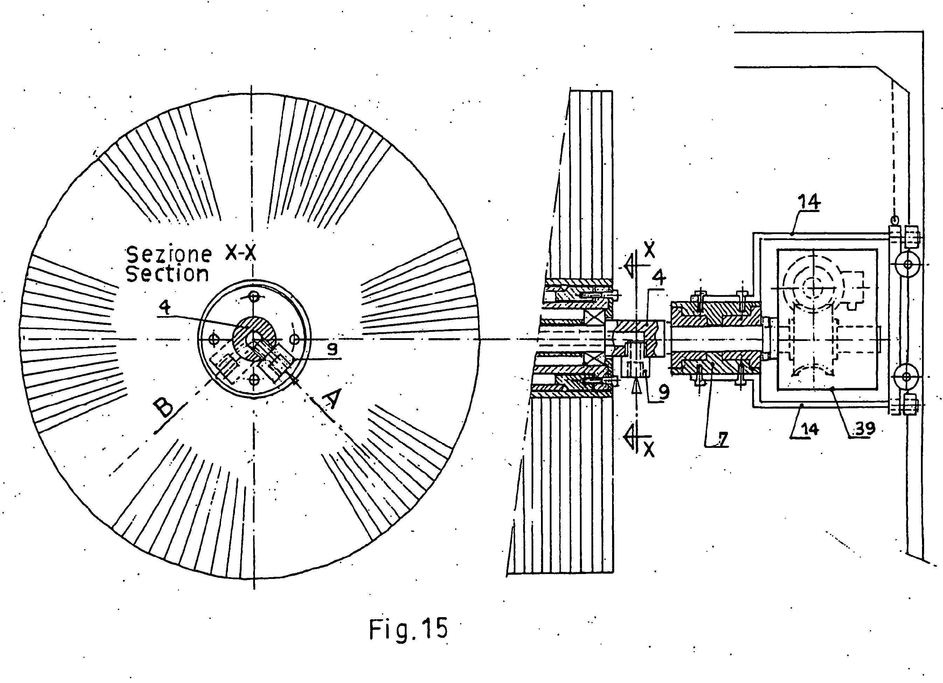

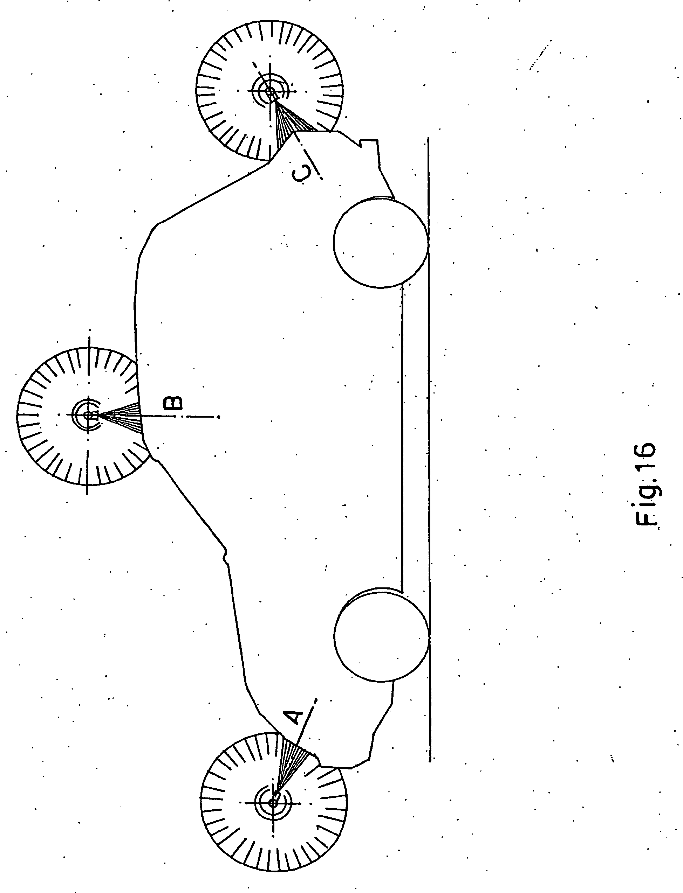

En alternative, le changement de direction du tube collecteur porte-buses peut être effectué en appliquant, par exemple, un mécanisme électrique directement sur le tube collecteur, comme illustré dans la figure 15 (39), à la place des cylindres (37) et (40).

### Nomenclature des parties illustrées dans les figure 2 et figure 15

37) - Cylindre pneumatique à double effet;
38) - Etrier fixage cylindre;
7) - Support brosse côté droit;
9) - Raccord d'entrée;
14) - Etriers pour l'ancrage du support droit du chariot;
15) - Frette de blocage;
8) - Levier de commande pour le déplacement du tube collecteur porte-buses;
4) - Pivot avec trou passant coaxial au tube collecteur;
39) - Mécanisme électrique (seulement pour la figure 15);
"A" - Position tube collecteur avec un angle orienté sur la partie antérieure du véhicule;
"B" - Position tube collecteur avec un angle orienté sur la partie postérieure du véhicule;

### Nomenclature des parties illustrées dans la fugure 3

37) - Premier cylindre pneumatique à double effet;
40) - Deuxième cylindre pneumatique à double effet;
"A" - Position tube collecteur avec un angle orienté vers l'avant du véhicule;
"B" - Position tube collecteur avec un angle orienté vers le toit du véhicule (pour les brosses verticales elle sera: avec un angle orienté sur la partie-laterale du véhicule);
« C » - Position tube collecteur avec un angle orienté sur l'arrière du véhicule;

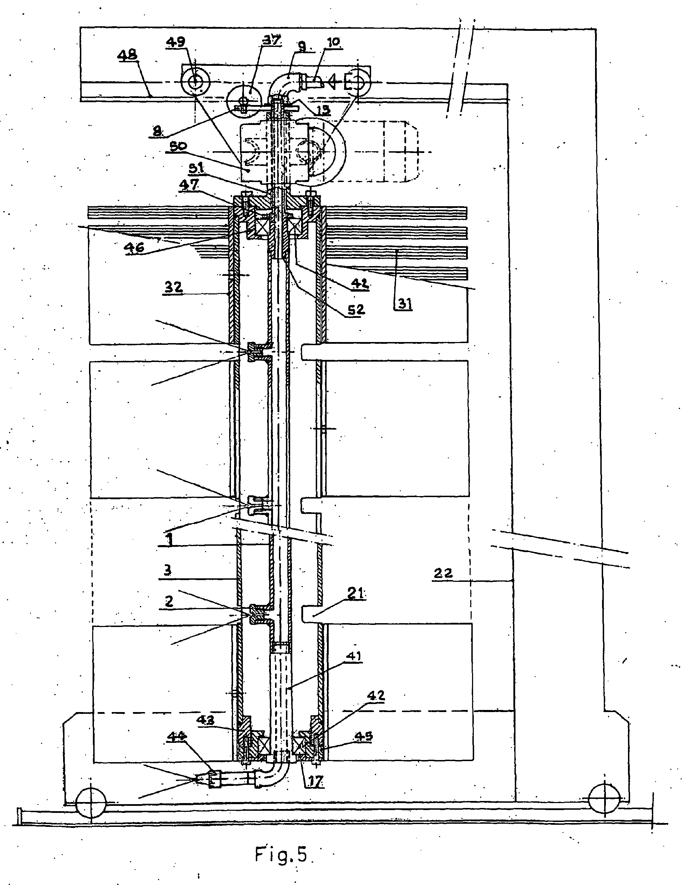

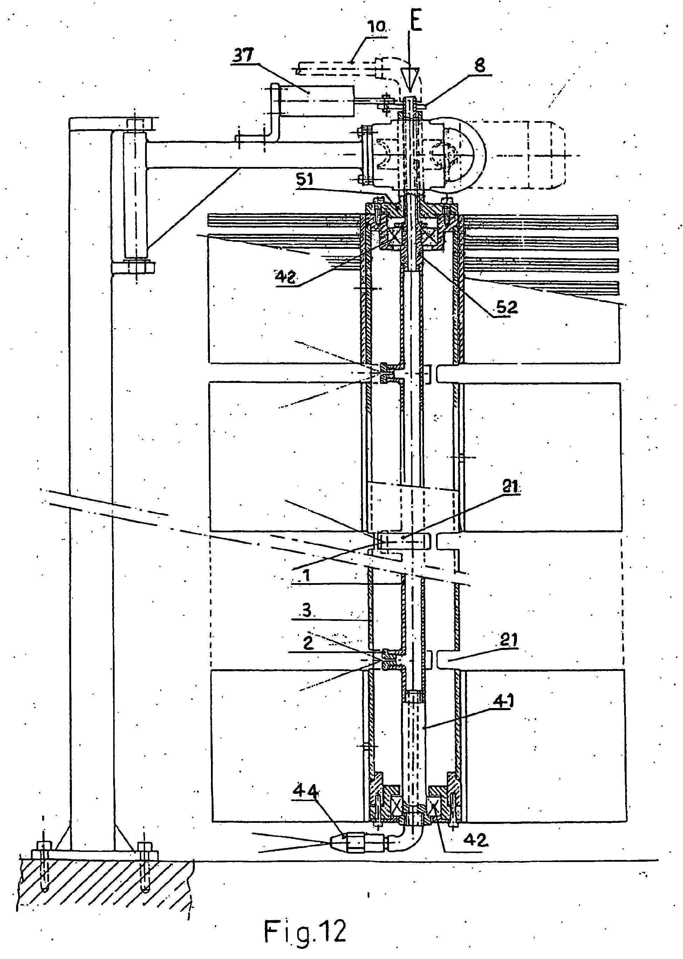

### "Brosse verticale avec des buses aspergeantes" figure 5 et figure 12

Identique à la brosse horizontale, le tube collecteur peut être inséré dans les brosses verticales des «installations de nettoyage automatiques» en général . Les brosses verticales sont soutenues, en genre, seulement par un chariot unique en haut. L'alimentation hydrique peut se produire du côté supérieur de la brosse, ainsi illustré dans la figure 5: entrée "E". Sur cette figure, on voit l'arbre de transmission, figure 5 (51) muni d'un "trou central", où se loge un moyeu (52). Ce moyeu, à son tour, est muni d'un "trou passant" pour l'alimentation. Le moyeu avec trou passant (52) reste immobile par rapport à l'arbre de trasmission (51) qui tourne avec la brosse. Nécessairement entre la parties fermes et les parties en rotations, sont insérés des appropriés roulements d'appui (42). Le moyeu avec trou passant (52) est connecté à extérieur avec des raccords d'entrée de l'eau (9) et (10), et il est connecté à l'intérieur avec le tube collecteur porte-buses (1). En considération du fait que la salissure des véhicules se trouve dans la plupart des cas sur les parties basses (roues-para-chocs), il est possible d'ajouter un ou plusieurs buses externes dans la partie basse de la brosse (44) orientées vers le «avant» ou «arrière» du véhicule par un cylindre pneumatique (37), de la même manière que la brosse horizontale.

### Nomenclature de la brosse verticale figure 5 et figure 12

1) - Tube collecteur porte-buses;
2) - Buses aspergeantes;
3) - Arbre (ou corps tubulaire) porte-franges;
41) - Pivot inférieure avec trou passant;
42) - Roulements à billes;
43) - Collier d'extrémité, pour le fixage du support roulement;
44) - Buse "extérieure" (nettoyage roues - parties basses);
9) - Raccord d'entrée;
15) - Frette de blocage;
10) -Tube d'alimentation;
8) - Levier de commande pour le changement à plus positions du collecteur porte-buses 37) - Cylindre pneumatique pour le positionnement du tube collecteur;
17) - Joue de blocage roulements;
45) - Support intérieur roulements;
21) - Série de fentes, réalisées autour de la circonférence de l'arbre porte-franges;
22) - "Portique mobile" nettoyage automatique;
46) - Support roulement;
47) - Frette (ou embout) de blocage;
48) - Coulisse chariot;
49) - Chariot coulissant porte groupe brosse verticale;
50) - Groupe moteur-réducteur(avec l'arbre bridé avec un trou central);
51) - Arbre de transmission du mouvement de rotation, bridé avec un trou central;
31) - Franges anti-griffures;
42) - Roulement à billes;
52) - Moyeu avec un trou passant pour le passage des alimentations;
32) - Collier porte-franges;

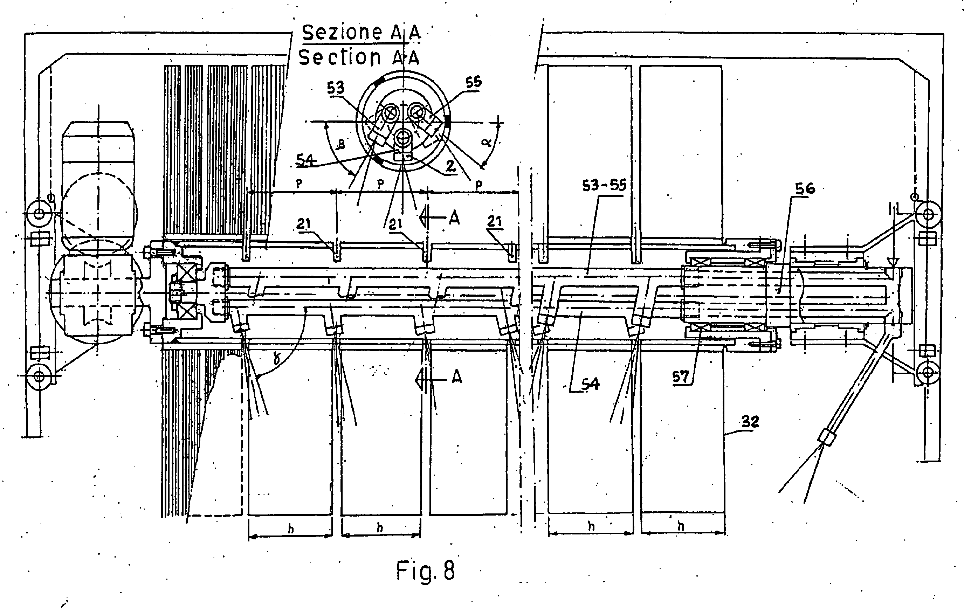

Un autre exemple est représenté dans la figure 8 , avec l'emploi de trois tubes collecteurs, où le tube (53) aura les buses orientées vers le "avant" du véhicule (avec un angle Alpha), le tube (54) aura les buses orientées pour travailler sur le "toit", ( ou sur les parties latérales des véhicules pour les brosses verticales), tandis que le tube (55) aura les buses orientées pour

intervenir sur le "arrière" du véhicule (angle Bêta). Les buses auront des angles prédéfinis (Gamme) respect à l'axe du tube collecteur. En ayant trois tubes collecteurs avec le "positionnement" déjà établi (avant-toit-arrière), le cylindre pneumatique à double effet n'est pas nécessaire. Dans ce cas, aussi, les trois tubes collecteurs porte-buses seront sélectionnés, pendant le cycle de nettoyage, par trois électro-soupapes respectives à deux voies.

### Nomenclature des parties illustrées dans la figure 8

53) - Premier tube collecteur porte-buses (orienté vers le "avant du véhicule");
54) - Deuxième tube collecteur (orienté vers le "toit");
55) - Troisième tube collecteur (orienté vers le "arrière" du véhicule);
56) - Arbre interne porte-tubes, avec plusieurs trous de passage;
57) - Roulements à rouleaux;
32) - Colliers-franges;
21) - Fentes pour le passage des jets, réalisées sur la circonférence de l'arbre; "Alpha - Bêta" - Angles d'incidence (ou orientation) des tubes porte-buses; "Gamme" - Différents angles des buses respect au tube-collecteur;

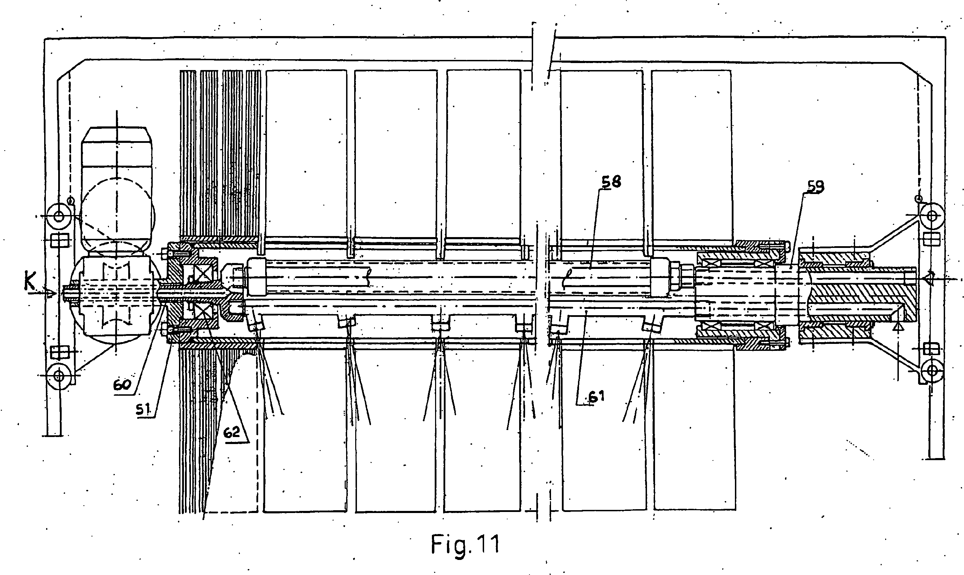

Pour conclure cette série de propositions, on illustre aussi une idée provocatrice, figure 11, où on a ajouté, parallèlement aux tubes porte-buses, un corps éclairant, figure 11 (58), qui est inséré dans une protection isolée, adéquatement fixé à l'arbre (59) et moyeu aux extrémités (60). Ces rayons de lumière qui sortent des fentes en rotation, en se reflétant sur les franges pourraient avoir un effet nocturne intéressant. Le câble électrique d'alimentation peut entrant par "K" (côté gauche), à travers le moyeu (60), à l'intérieur de l'arbre de transmission, bridé de manière "spéciale" avec un trou central (51) du groupe moteur-réducteur.

### Nomenclature des parties illustrées dans la figure 11

58) - Corps éclairant isolé;
59) - Arbre interne porte-tubes, avec plusieurs trous de passage;
60) - Moyeu perforé pour le passage du câble électrique;
51) - Arbre de transmission, fabriqué avec un trou central;
61) - Tube (ou tubes) porte-buses;
62) - Roulement d'appui pour moyeu perforé ( ou pivot avec un trou central); "K" - Entrée à l'intérieur de l'arbre;

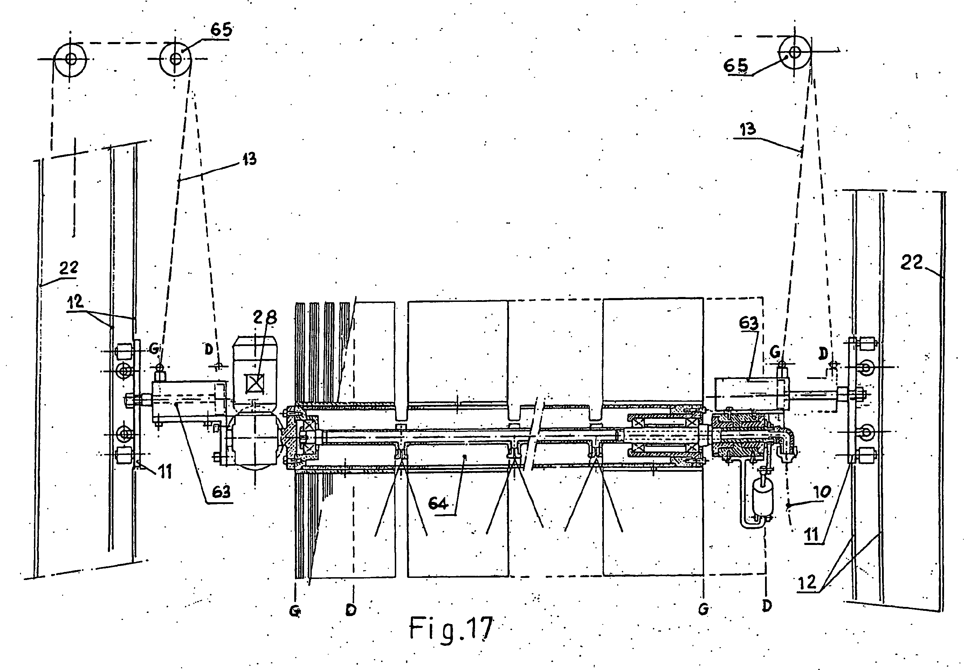

### Brosse oscillante figure 17

Une autre idée proposée comme variante aux solutions exposées précédentemen est le mouvement rythmique "droite-gauche" de toute la brosse horizontale. Dans ce cas-là, nous aurons les jets et les franges qui opèrent sur la carrosserie des véhicules, avec un travail «croisé», dû au mouvement de déplacement du "Portique mobile" en même temps au mouvement rythmé, horizontal de brosse. Si, par exemple, nous avons les éléments franges (ou colliers-franges) de 180-200 mm, interposés à des jets aspergeants distants de 200 mm, pour obtenir la complète couverture de travail des jets, la brosse doit avoir un déplacement de 200 mm. Pour le déplacement de la brosse horizontale, on utilise un cylindre pneumatique qui agit à double effet(63).

### Nomenclature des parties illustrées dans la figure 17

« D »- Maximum déplacement à droite de la brosse ;
« G »- Maximum déplacement à gauche ;
63)- Cylindre pneumatique à double effet;
64)- Ensemble "brosse", voir figure 1;
10) - Alimentation hydrique;
28)- Alimentation électrique;
22)- Structure du "Portique-mobile";
11)- Chariot de coulissement de la brosse;
12)- Guide de coulissement chariot;
13)- Corde ou chaîne de soulèvement;
65) - Poulies pour cordes de soulèvement;

### Avantages

- Dans les installations à "Portique mobile", douées de "rampes-supplémentaires" pour le prélavage des véhicules au moyen de jets à haute pression, les deux phases: "lavage à jets haute pression" et "brossage du véhicule" s'effectuent successivement l'une à l'autre, avec double course, avant et arrière, du portique lui-même. Gràce à l'emploi de cette "nouvelle brosse", les deux opérations peuvent subsister en même temps, en épargnant la moitié du temps par rapport au nettoyage des véhicules (plus de nettoyages pendant la journée, plus de profit).
- Approche et maintien à distance rapprochée des jets d'eau de la carrosserie des véhicules. Les franges, pendant leur opération classique de "brossage", se posent doucement sur les véhicules, en se maintenant à une distance à peu prés constante; donc constante est aussi la distance des jets, puisque .les buses aspergeantes sont à l'intérieur des franges. En outre, les jets-mêmes, à cause de leur poussée naturelle de réaction, contribuent même, en mineure mesure, à un appui encore plus doux de la brosse sur le véhicule.

Actuellement, dans les installations automatiques de nettoyage, l'imitation de la silhouette des véhicules par les arches supplémentaires ou "rampes-mobiles" porte-buses, est effectuée (quand les franges sont arrêtées) par des photocellules et des capteurs mécaniques de sécurité. Ceux-ci interviennent plus ou moins rapidement sur les dispositifs de soulèvement des rampes mêmes, tandis que le portique avance vers le véhicule. Souvent, l'intervention d'un capteur mécanique de sécurité "touche" la carrosserie et arrête le déplacement du portique pour éviter la collision avec le véhicule-même. En conséquence, on a une distance opérative qui n'est pas harmonisée: l'approche de la rampe porte-buses à la silhouette des véhicules se produit à "sauts" et il est incertain (parfois trop proche, parfois trop lontain).
- Moins de déspense d'eau et un effet positif sur le client. Dans les installations traditionnelles, en plus des rampes de "lavage" et "rinçage" des véhicules, d' autres rampes ou des jets spécifiques sont prévus, afin de baigner les brosses: des jets fixés au portail et orientés approximativement vers les brosses. L'eau arrive aux brosses de l'extérieur, en tomber de manière dispersive; elle est immédiatement centrifugée par les franges en rotation. Dans notre cas, ces dernières rampes ou jets ne sont pas nécessaires: les franges sont "lavées" constamment de la salissure par les jets d'eau sous pression qui sortent du centre de la brosse; (on répète: nos jets agissent sur la carrosserie des véhicules et en même temps "lavent" les franges). L'effet d'une brosse abondamment nettoyée à partir de l'intérieur, est sûrement positif aux yeux du client-observateur qui est généralement méfiant par rapport l'utilisation des "Installations automatiques" par crainte que les franges (plus ou moins sales), puissent "griffer" le vernis de sa voiture.
- Dans la version avec la brosse oscillante, voir figure 17, les jets et les franges gràce leur mouvement rythmique se superposent en effectuent un travail plus complet et incisif, parce que il est "croisé" par rapport à de l'avancement du "Portique mobile". On aura un meilleur résultat aussi sur les parties "semi-cachées" de la carrosserie des véhicules.

## Revendications

1. Une brosse de nettoyage avec des buses aspergeantes dirigées à commande pour le nettoyage des véhicules en général, la brosse ayant plusieurs fentes (21), réalisées sur la circonférence de l'arbre porte-franges (3) et interposées entre les différents colliers de franges , en outre ladite brosse a, intégré à l'intérieur, un tube collecteur (1) qui porte plusieurs buses (2), pour l'aspersion des jets d'eau à haute pression qui sortent du centre de l'arbre porte-franges (3) à travers les fentes (21) sus-dites, à l'intérieur de la brosse sont en outre inclus le pivot avec trou passant (4) et un moyeu (35) connectés au tube collecteur (1), la brosse étant **caractérisée en ce que** elle comprend un moto-réducteur (24) qui fait tourner l'arbre porte-franges (3) tandis qu'à l'intérieur le tube collecteur (1) reste fixe, le changement de position du tube collecteur (1) étant obtenu par un levier de commande (8) accroché au pivot, sur le levier (8) agit un cylindre pneumatique qui imprime une rotation pilotée aux connexions intérieures de la brosse et aux buses (2).

2. Une brosse, pour le nettoyage des véhicules selon la revendication 1, étant **caractérisée en ce que** elle comprend plusieurs fentes appropriées (21), réalisées sur la circonférence de l'arbre porte-franges (3) en nombre minimum de trois fentes pour chaque buse, interposées entre les colliers-franges (32), dans le but de permettre la sortie de l'intérieur de l'arbre (3) vers l'extérieur des jets d'eau aspergés par les buses (2) qu'ils restent fixes à l'intérieur de l'arbre (3), pendant que ce dernièr est en rotation.

3. Une brosse pour le nettoyage des véhicules selon la revendications 1 et 2, **caractérisée par** ladite brosse qui inclut un pivot avec trou passant (4), le pivot (4) reste en position ferme à l'intérieur de l'arbre (3), qu' il par contre tourne, ledit pivot avec trou passant (4) servant de conduite pour l'eau, parce qu'il à l'intérieur de l'arbre (3) est connecté au tube collecteur (1), tandis qu'à droite, il traverse le support extérieur (7) de la brosse, pour s'accrocher avec le raccord d'entrée de l'eau (9), à ledit pivot (4) est aussi accroché le levier (8), qui sert pour imprimer une rotation pilotée aux connexions intérieures de la brosse, et aux buses (2).

4. Une brosse pour le nettoyage des véhicules selon les précédentes revendications, **caractérisée par** ladite brosse qui inclut à intérieur de l'arbre (3), le tube collecteur porte-buses (1), posé sur des roulements à billes à l'extrémité (23) et (20), ledit collecteur (1) reste en position ferme, avec les buses (2) orientées vers la surface du véhicule, tandis que l'arbre (3) tourne.

5. Une brosse pour le nettoyage des véhicules selon les précédentes revendications, **caractérisée par** ladite brosse qui inclut à intérieur dell' arbre (3), plusieurs buses (2) fixés au tube collecteur (1), dites buses (2) restent en position ferme, tandis que l'arbre (3) tourne, cette série des buses (2), réparties également sur le tube collecteur (1) propulse les jets d'eau à travers plusieurs fentes (21) orientées vers la surface du véhicule.

6. Une brosse pour le nettoyage des véhicules selon les précédentes revendications, **caractérisée par** ladite brosse qui inclut à l'intérieur le moyeu (35), composant terminal du tube collecteur (1), ce moyeu (35) qui reste en position ferme, sert de logement au roulement à billes (23) pour la rotation de l'arbre porte-franges (3).

7. Una brosse pour le nettoyage des véhicules selon les revendications 1 à 5, **caractérisée par** ladite brosse qui inclut à l'intérieur le moyeu avec trou passant (52), ledit moyeu loge et travérse le "trou central" de l'arbre de transmission (51) de le moteur-réducteur (50), le moyeu (52), reste immobile par rapport à l'arbre de transmission (51) qui tourne, ledit moyeu sert pour l'alimentation hydrique qui est connectée, dans le côté supérieur de la brosse, en meme temps, au moyeu (52) est accroché le levier de commande (8) sur lequel agit le cylindre pneumatique (37) qui sert pour imprimer une rotation pilotée aux connexions intérieures de la brosse, et aux buses (2, 44).

8. Un brosse pour le nettoyage des véhicules selon les précédentes revendications, **caractérisée par** ladite brosse qui comprend un cylindre pneumatique à double effet (37), ledit cylindre sert pour le changement de direction du tube collecteur porte - buses (1), ce cylindre pneumatique en agissant sur le levier (8), imprime une rotation pilotée aux connexions intérieures de la brosse, et aux buses (2, 44).

9. Un brosse pour le nettoyage des véhicules selon les précédentes revendications, **caractérisée par** ladite brosse qui comprend un cylindre pneumatique à double effet (63), ledit cylindre pneumatique (63) sert pour imprimer un moviment rythmique « droite -gauche » à la brosse même, pendant le cycle de nettoyage.

10. Une brosse pour le nettoyage des véhicules selon les précédentes revendications, **caractérisée par** ladite brosse qui inclut à l'interieur un corps éclairant (58), qui est inséré dans une protection isolée, adéquatement fixé à l'arbre (59) et moyeu aux extrémités (60), ledit corps éclairant (58) est doté de son câble électrique d'alimentation qui peut entrer a l'intérieure par trou ("K"), à travers le moyeu (60), présent à l'intérieur de l'arbre de transmission avec un trou central (51) du groupe moteur-réducteur.

## Claims

1. A cleaning brush with controlled internal and external sprying nozzles for the cleaning of vehicles in general, the brush has several slots (21), realized on the circumference of the bristles-carrying-shaft (3) and interposed between the different collars of bristles, moreover the mentioned brush has, a collector-pipe (1) integrated inside, that carries several nozzles (2) for the aspersion of water jets at high pressure, they leak-out from the bristles-carrying-shaft (3), through the slots (21) mentioned above, inside the brush moreover the axle with passing hole (4) and one hub (35) attached to the collector-pipe (1) are included, the brush is **characterized in that** it includes one motor-reduction-gear (24), that makes the bristles-carrying-shaft (3) turn, while on the inside the collector-pipe (1) remains fixed, the change of position of the collector-pipe (1) is made by being a command (8), bound to the axle (4), on the lever (8) a pneumatic cylinder works, giving a controlled rotation to the internal connections of the brush and to the nozzles (2).

2. A brush, for cleaning of vehicles according to the claim 1, **characterized in that** it includes several specified slots (21), realized on the circumference of the bristles-carrying-shaft (3) with a minimum of three slots for each nozzle, interposed between the collars of bristles (32), in order to permit the exit, from the inside to the outside of the shaft (3) of the water jets from the nozzles (2), which remain fixed on the inside of the shaft (3), while this last one rotates.

3. A brush for the cleaning of vehicles according to the claims 1 and 2, featuring the mentioned brush, that incorporates one axle with a passing hole (4), the axle (4) remains in a fixed position within the shaft (3), while this latter turns, mentioned axle with the passing hole (4) works as water conductor, being inside of the shaft (3) connected to the collector-pipe (1), while on the right side, it crosses the external support (7) of the brush, in order to couple itself with the entrance connection of the water (9), at the mentioned axle (4) the lever (8) is also bound, that works in order to give a controlled rotation, to the internal connections of the brush, and to the nozzles (2).

4. A brush for the cleaning of vehicles according to every previous claim, featuring the mentioned brush that incorporates, inside of the shaft (3), the nozzles-carrying-collector-pipe (1), placed on sphere bearings at the extremities (23) and (20), the mentioned collector (1) remains in a fixed position, with the nozzles (2) oriented towards the surface of vehicle, while the shaft (3) turns around.

5. A brush for the cleaning of vehicles according to every previous claim, featuring the mentioned brush that incorporates inside of the shaft (3), several nozzles (2), fixed to the collector pipe (1), the mentioned nozzles (2) remain in a fixed position, while the shaft (3) turns, this a set of nozzles (2), equally distributed on the collector-pipe (1) sprays water jets through several specified slots (21) oriented towards the surface of the vehicle.

6. A brush for the cleaning of the vehicles according to every previous claim, featuring the mentioned brush that incorporates an internal hub (35), terminal constituent of the collector-pipe (1), this mentioned hub (35), remains in a fixed position, and it works as housing for the ball bearing (23) for the rotation of the bristles-carrying-shaft (3).

7. A brushes for the cleaning vehicles according to claims 1 to 5 , featuring the mentioned brush that incorporates an internal hub with passing hole (52), the mentioned hub hauses and crosses the "central hole" of the transmission-shaft (51) of the motor-reducer (50), the hub (52) remains in a fixed position respect the transmission-shaft (51) which turns, meanwhile the mentioned is necessary for the water-supply that is connected to upper side of the brush, at the same time, the hub (52), is bound to the control lever (8), on which the pneumatic cylinder (37) works, this is used to give a controlled rotation to the internal connections of the brush, and to the nozzles (2, 44).

8. A brush for the cleaning of the vehicles according to every previous claim, featuring the mentioned brush that includes one pneumatic cylinder with a double effect (37), the mentioned cylinder is necessary for the change of direction of the nozzles-carrying-collector-pipe (1), this pneumatic cylinder while operating on the lever (8), gives a controlled rotation to the internal connections of the brush, and to the nozzles (2, 44).

9. A brush for the cleaning of the vehicles according to every previous claim, featuring the mentioned brush that includes one pneumatic cylinder with a double effect (63), the mentioned pneumatic cylinder (63) gives a rhythmic "right-left" moviment to the whole brush, during the cleaning cycle.

10. A brush for the cleaning of the vehicles according to every previous claim, featuring the mentioned brush that incorporates an internal lighting body (58), which is inserted with an isolating protection, adequately fixed to the shaft (59) and the end-hab (60), the mentioned lighting body (58) is equipped with an electric càble supply, that can to enter inside by hole ("K"), through the internal hub (60), of the transmission-shaft with a central hole (51) of the motor-reduction-gear-group.

## Patentansprüche

1. Eine Reiningungsbürste mit schwenkbaren Sprühdüsen für die Reinigung von Fahrzeugen im allgemeinen, um den Umfang der Bürsten-Rohrwelle (3) sind mehrere Schlitze (21) angeordnet die in der Spalte zwischen den verschiedenen Bürstenelementen realisiert worden sind, außerdem befindet sich im Inneren der oben genannten Bürstenwelle ein mit mehreren Sprühdüsen (2) ausgerüsteten Sammelrohr (1) für das Erzeugen der Hochdruck-Wasserstrahlen die aus dem Inneren der Bürstenwelle (3) durch die oben genannten Schlitze (21) ausgesprüht werden, innerhalb der Bürstenwelle befinden sich außerdem einen hohlen Achse (4) und eine Nabe (35) und beide sind mit dem Sammelrohr (1) gekoppelt, die Bürstengruppe ist mit einem Motor-Untersetzungsgetriebe (24) für die Rotation der Bürstenwelle (3) ausgestattet, dagegen das interne Sammelrohr (1) bleibt fest, die Schwenkung des Sammelrohrs (1) erfolgt durch einen mit dem Achse (4) gekoppelten Betätigungshebel (8), ein pneumatischer Zylinder wirkt über den Hebel (8) und steuert die Winkelstellung der internen Verbindungen der Bürste und der Sprühdüsen (2).

2. Eine Bürstengruppe für die Reinigung von Fahrzeugen nach Patentanspruch 1, charakterisiert **dadurch** dass mehrere geeignete Schlitze (21) um den Umfang der Bürsten-Rohrwelle (3) in der Spalte zwischen den verschiedenen Bürstenelementen (32) realisiert sind, um den Austritt der Hochdruck-Wasserstrahlen aus dem Inneren der Bürstenwelle (3) nach Außen zu ermöglichen, für jede Sprühdüse sind mindestens drei Schlitze vorgesehen, dabei bleiben die Sprühdüsen (2) fest während die Bürstenwelle (3) dreht.

3. Eine Bürstengruppe für die Reinigung von Fahrzeugen nach Patentansprüchen 1 und 2, charakterisiert **dadurch** dass die genannte Bürstengruppe mit einem hohlen Achse (4) ausgerüstet ist, die Position des Achses (4) innerhalb der rotierenden Rohrwelle (3) bleibt fest, der hohle Achse (4) dient als Wasserleitung da er innerhalb der Rohrwelle (3) mit dem Sammelrohr (1) gekoppelt ist, während auf der rechten Seite er die externe Bürstenhalterung (7) durchquert um sich mit dem Winkelstück (9) der Wasserzufuhrleitung zu verbinden, dieser Achse (4) ist außerdem mit einem Hebel (8) gekoppelt welcher dazu dient die internen Verbindungen der Bürste und die Sprühdüsen (2) gezielt zu schwenken.

4. Eine Bürstengruppe für die Reinigung von Fahrzeugen, nach der oben genannten Patentansprüche, charakterisiert **dadurch** dass beide Enden (23) und (20) des innerhalb der Rohrwelle (3) eingebauten Sprühdüsen-Sammelrohrs (1) auf Kugellager gestützt sind, der Sammelrohr (1) bleibt fest, mit den Düsen (2) gegen die Fahrzeugoberfläche gerichtet, während die Bürstenwelle (3) dreht.

5. Eine Bürstengruppe für die Reinigung von Fahrzeugen, nach der oben genannten Patentansprüche, charakterisiert **dadurch** dass innerhalb der Bürsten-Rohrwelle (3), mehrere Sprühdüsen (2) am Sammelrohr (1) befestigt sind, diese Sprühdüsen (2) bleiben fest während die Bürsten-Rohrwelle (3) dreht, die Sprühdüsen (2) sind gleichmäßig entlang des Sammelrohrs (1) verteilt und spritzen die Wasserstrahlen auf die Fahrzeugoberfläche durch die verschiedenen Schlitze (21).

6. Eine Bürstengruppe für die Reinigung von Fahrzeugen, nach der oben genannten Patentansprüche, charakterisiert **dadurch** dass die innerhalb der Bürstenwelle eingebaute Nabe (35) das Endstück des Sammelrohrs (1) ist, diese Nabe (35) bleibt immer fest und dient als Sitz des Kugellagers (23) für die Drehbewegung der Bürsten-Rohrwelle (3).

7. Eine Bürstengruppe für die Reinigung von Fahrzeugen, nach den Patentansprüche 1 und 5, charakterisiert **dadurch** dass innerhalb der Bürstenwelle die hohle Nabe (52) eingebaut ist, diese Nabe ist durch die Bohrung der Übertragungswelle (51) des Motor-Untersetzungsgetriebes (50) geführt und bleibt fest während die Übertragungswelle (51) dreht, die Nabe (52) wird für den Anschluss der von der oberen Seite der Bürstenwelle ankommenden Wasserversorgungsleitung benutzt, gleichzeitig ist die Nabe (52) mit einem Hebel (8) gekoppelt die über den pneumatischen Zylinder (37) gesteuert wird um die internen Verbindungen der Bürste sowie die internen Sprühdüsen (2, 44) gezielt zu schwenken.

8. Eine Bürstengruppe für die Reinigung von Fahrzeugen, nach der oben genannten Patentansprüche, charakterisiert **dadurch** dass sie mit einem doppeltwirkenden pneumatischen Zylinder (37) für die Schwenkung des Sprühdüsen-Sammelrohrs (1) ausgestattet ist, der genannte pneumatische Zylinder wirkt über den Hebel (8) um die internen Verbindungen der Bürste sowie die internen Sprühdüsen (2, 44) gezielt zu schwenken.

9. Eine Bürstengruppe für die Reinigung von Fahrzeugen, nach der oben genannten Patentansprüche, charakterisiert **dadurch** dass sie mit einem doppeltwirkenden pneumatischen Zylinder (63) ausgestattet ist, dieser Zylinder (63) sorgt für die rhythmische Hin- und Herbewegung der gesamten Bürstengruppe während des Waschvorgangs.

10. Eine Bürstengruppe für die Reinigung von Fahrzeugen, nach der oben genannten Patentansprüche, charakterisiert **dadurch** dass sie mit einem wasserdicht geschützten und an der Rohrwelle (59) und der Endnabe (60) passend befestigten internen Beleuchtungskörper (58) ausgestattet ist, der Stromversorgungskabel des genannten Beleuchtungskörpers (58) kann durch das Loch "K" und durch die Nabe (60), die sich innerhalb der durchgebohrten Übertragungswelle (51) des Motor-Untersetzungsgetriebes befindet, geführt und angeschlossen werden.
